# EUROPEAN PATENT APPLICATION

(11) **EP 4 657 462 A1**
(43) Date of publication of application: **03.12.2025**
(21) Application number: 23950529.0
(22) Date of filing: 14.12.2023
(51) Int. Cl.: G21C 17/00

(54) **OVERALL LEAKAGE RATE MONITORING APPARATUS FOR CONTAINMENT VESSEL, AND OVERALL LEAKAGE RATE MONITORING METHOD FOR CONTAINMENT VESSEL**

(30) Priority: 28.08.2023 CN 202311089651
(71) Applicant: China Nuclear Power Engineering Co., Ltd., Shenzhen, Guangdong 518124 (CN); China Nuclear Power Design Company Ltd. (Shenzhen), Shenzhen, Guangdong 518172 (CN)
(72) Inventor: BAO, Qingbo, Shenzhen, Guangdong 518172 (CN); ZHOU, Shaofei, Shenzhen, Guangdong 518172 (CN); HU, Jian, Shenzhen, Guangdong 518172 (CN); FU, Xiaotao, Shenzhen, Guangdong 518172 (CN); PENG, Yue, Shenzhen, Guangdong 518172 (CN); XU, Chende, Shenzhen, Guangdong 518172 (CN); LIU, Lijun, Shenzhen, Guangdong 518172 (CN); ZHOU, Yuanxia, Shenzhen, Guangdong 518172 (CN)
(74) Representative: V.O.
(86) International application number: PCT/CN2023/138836
(87) International publication number: WO 2025/043963

(57) **Abstract**

The present application relates to an overall leakage rate monitoring apparatus for a containment vessel, and an overall leakage rate monitoring method for a containment vessel. The monitoring apparatus comprises: a flow monitoring assembly, a pressure monitoring assembly, a pressure comparison monitoring assembly, an instrument monitoring assembly and a processor, wherein the flow monitoring assembly, the pressure monitoring assembly, the pressure comparison monitoring assembly and the instrument monitoring assembly are each connected to the processor; the flow monitoring assembly is used for monitoring a depressurization flow value inside a containment vessel; the pressure monitoring assembly is used for monitoring a pressure value inside the containment vessel; the pressure comparison monitoring assembly is used for monitoring a pressure comparison value between the inside of the containment vessel and the outside of the containment vessel; the instrument monitoring assembly is used for monitoring the temperature and humidity in the containment vessel; and the processor is used for acquiring the overall leakage rate of the containment vessel on the basis of the depressurization flow value, the pressure value, the pressure comparison value, and the temperature and humidity. The method can solve the defect in an instrument configuration method for an overall leakage rate test for a containment vessel of a nuclear reactor.

## Description

### CROSS-REFERENCE TO RELATED APPLICATION

The present application claims priority to Chinese Patent Application with No. 202311089651.8, entitled "Overall Leakage Rate Monitoring Apparatus for Containment vessel, and Overall Leakage Rate Monitoring Method for Containment vessel", and filed on August 28, 2023, the content of which is expressly incorporated herein by reference in its entirety.

### TECHNICAL FIELD

The present application relates to the field of nuclear power technology, particularly to an overall leakage rate monitoring apparatus and method for a containment vessel.

### BACKGROUND

Generally, the overall leakage rate of the nuclear reactor containment vessel in the nuclear power plant needs to be tested by collecting the data of the temperature, humidity, and pressure probes inside the containment vessel, in order to calculate the containment vessel overall leakage rate by using the collected data to test the sealing performance of the containment vessel.

In the conventional technology, the collection instruments for data inside the containment vessel are configured based on the configuration experiences of the historical projects. Accordingly, a configuration method for an overall leakage rate test instrument of the nuclear reactor containment vessel is missing from the conventional technology.

### SUMMARY

In view of this, as for the above technical problem, it is necessary to provide an overall leakage rate monitoring apparatus and method for a containment vessel capable of solving the lack of a configuration method for a nuclear reactor containment vessel overall leakage rate test instrument.

In the first aspect of the present application, an overall leakage rate monitoring apparatus for a containment vessel is provided, including a flow monitoring assembly, a pressure monitoring assembly, a pressure comparison monitoring assembly, an instrument monitoring assembly and a processor; the flow monitoring assembly, the pressure monitoring assembly, the pressure comparison monitoring assembly, and the instrument monitoring assembly are respectively connected to the processor;
the flow monitoring assembly is configured to monitor a pressure relief flow value inside the containment vessel;
the pressure monitoring assembly is configured to monitor a pressure value inside the containment vessel;
the pressure comparison monitoring assembly is configured to monitor a pressure comparison value between pressure values inside and outside the containment vessel;
the instrument monitoring assembly is configured to monitor a temperature and humidity inside the containment vessel; and
the processor is configured to obtain a containment vessel overall leakage rate according to the pressure relief flow value, the pressure value, the pressure comparison value, and the temperature and humidity.

In an embodiment, the flow monitoring assembly may include a first containment vessel isolation valve unit, a drainage unit, and a pressure relief pipeline monitoring unit, both the drainage unit and the pressure relief pipeline monitoring unit are provided outside the containment vessel, the first containment vessel isolation valve unit is connected to the drainage unit, the drainage unit is connected to the processor through the pressure relief pipeline monitoring unit and is configured to transmit the flow value monitored by the flow monitoring assembly to the processor.

In an embodiment, the first containment vessel isolation valve unit may include a first containment vessel penetration member, a first containment vessel internal isolation valve, and a first containment vessel external isolation valve, the first containment vessel internal isolation valve is provided inside the containment vessel, and the first containment vessel external isolation valve is provided outside the containment vessel, a first terminal of the first containment vessel internal isolation valve is provided inside the containment vessel, a second terminal of the first containment vessel internal isolation valve is connected to a first terminal of the first containment vessel penetration member, and a second terminal of the first containment vessel penetration member is connected to a first terminal of the first containment vessel external isolation valve.

In an embodiment, the drainage unit may include a first drainage isolation valve and a drainage pit, a first terminal of the first drainage isolation valve is connected to the drainage pit, and a second terminal of the first drainage isolation valve is connected to a second terminal of the first containment vessel external isolation valve.

In an embodiment, the pressure relief pipeline monitoring unit may include a pressure relief pipeline isolation valve, a pressure relief pipeline main flow regulation valve, a pressure relief pipeline test flow regulation valve, a measurement orifice plate, an upstream flow measurement root valve, a downstream flow measurement root valve, a flow measurement instrument, a check valve, a second drainage isolation valve, an auxiliary exhaust valve, and a pressure relief main airflow discharge chamber,
a first terminal of the pressure relief pipeline isolation valve is connected to a convergence point of the first terminal of the first containment vessel external isolation valve, a second terminal of the first drainage isolation valve, and a first terminal of the pressure relief pipeline test flow regulation valve, a second terminal of the pressure relief pipeline test flow regulation valve is connected to the measurement orifice plate;
a second terminal of the pressure relief pipeline isolation valve is connected to a first terminal of the pressure relief pipeline main flow regulation valve, a second terminal of the pressure relief pipeline main flow regulation valve is connected to the measurement orifice plate and a convergence point of a first terminal of the check valve, a first terminal of the second drainage isolation valve, a first terminal of the auxiliary exhaust valve, and the pressure relief main airflow discharge chamber respectively;
the measurement orifice plate is further connected to a first terminal of the upstream flow measurement root valve and a first terminal of the downstream flow measurement root valve respectively, a second terminal of the upstream flow measurement root valve and a second terminal of the downstream flow measurement root valve are both connected to a terminal of the flow measurement instrument, a second terminal of the flow measurement instrument is connected to the processor and is configured to transmit a flow rate measured by the flow measurement instrument to the processor;
a second terminal of the check valve is connected to the second drainage isolation valve and the first terminal of the auxiliary exhaust valve respectively, and a second terminal of the auxiliary exhaust valve is connected to the pressure relief main airflow discharge chamber.

In an embodiment, the pressure monitoring assembly may include a second containment vessel isolation valve unit and a pressure measurement unit, the second containment vessel isolation valve unit is connected to the processor through the pressure measurement unit and is configured to transmit the pressure value monitored by the pressure monitoring assembly to the processor.

In an embodiment, the second containment vessel isolation valve unit may include a second containment vessel penetration member, a second containment vessel internal isolation valve, and a second containment vessel external isolation valve, the second containment vessel internal isolation valve is provided inside the containment vessel, the second containment vessel external isolation valve is provided outside the containment vessel, a first terminal of the second containment vessel internal isolation valve is provided inside the containment vessel, a second terminal of the second containment vessel internal isolation valve is connected to a first terminal of the second containment vessel penetration member, and a second terminal of the second containment vessel penetration member is connected to a first terminal of the second containment vessel external isolation valve.

In an embodiment, the pressure measurement unit may include a first containment vessel pressure measurement subunit and a second containment vessel pressure measurement subunit, the first containment vessel pressure measurement subunit is connected to a second terminal of the second containment vessel external isolation valve and the second containment vessel pressure measurement subunit respectively;
the first containment vessel pressure measurement subunit and the second containment vessel pressure measurement subunit are connected to each other in parallel, and are configured to mutually verify measured pressure values.

In an embodiment, first containment vessel pressure measurement subunit may include a first containment vessel pressure measurement primary diaphragm valve, a first containment vessel pressure measurement secondary diaphragm valve, a first pressure measurement root valve, and a first containment vessel pressure measurement instrument;
a first terminal of the first containment vessel pressure measurement primary diaphragm valve is connected to the second terminal of the second containment vessel external isolation valve, a second terminal of the first containment vessel pressure measurement primary diaphragm valve is connected to a convergence point of a first terminal of the first containment vessel pressure measurement secondary diaphragm valve and a first terminal of the first pressure measurement root valve, a second terminal of the first pressure measurement root valve is connected to a first terminal of the first containment vessel pressure measurement instrument, a second terminal of the first containment vessel pressure measurement instrument is connected to the processor and is configured to transmit a flow rate measured by the first containment vessel pressure measurement instrument to the processor.

In an embodiment, the second containment vessel pressure measurement subunit may include a second containment vessel pressure measurement primary diaphragm valve, a second containment vessel pressure measurement secondary diaphragm valve, a second pressure measurement root valve, and a second containment vessel pressure measurement instrument;
a first terminal of the second containment vessel pressure measurement primary diaphragm valve is connected to a convergence point of the first terminal of the first containment vessel pressure measurement primary diaphragm valve and the first terminal of the second containment vessel external solation valve, a second terminal of the second containment vessel pressure measurement primary diaphragm valve is connected to a convergence point of a first terminal of the second containment vessel pressure measurement secondary diaphragm valve and a first terminal of the second pressure measurement root valve, a second terminal of the second pressure measurement root valve is connected to the second containment vessel pressure measurement instrument, a second terminal of the second containment vessel pressure measurement instrument is connected to the processor and is configured to transmit a flow rate measured by the second containment vessel pressure measurement instrument to the processor.

In an embodiment, the pressure comparison monitoring assembly may include a containment vessel internal pressure comparison monitoring unit and a containment vessel external pressure comparison monitoring unit;
the containment vessel internal pressure comparison monitoring unit may include at least one containment vessel pressure measurement instrument connected to the processor;
the containment vessel external pressure comparison monitoring unit may include a first containment vessel external pressure comparison monitoring subunit and a second containment vessel external pressure comparison monitoring subunit;
the first containment vessel external pressure comparison monitoring subunit may include a third containment vessel penetration member, a third containment vessel external isolation valve, and a third containment vessel pressure measurement instrument, a first terminal of the third containment vessel penetration member is connected to the containment vessel, a second terminal of the third containment vessel penetration member is connected to a first terminal of the third containment vessel external isolation valve, a second terminal of the third containment vessel external isolation valve is connected to a first terminal of the third containment vessel pressure measurement instrument, and a second terminal of the third containment vessel pressure measurement instrument is connected to the processor and is configured to transmit a flow rate measured by the third containment vessel pressure measurement instrument to the processor;
the second containment vessel external pressure comparison monitoring subunit may include a fourth containment vessel penetration member, a fourth containment vessel external isolation valve, and a fourth containment vessel pressure measurement instrument, a first terminal of the fourth containment vessel penetration member is connected to the containment vessel, a second terminal of the fourth containment vessel penetration member is connected to a first terminal of the fourth containment vessel external isolation valve, a second terminal of the fourth containment vessel external isolation valve is connected to a first terminal of the fourth containment vessel pressure measurement instrument, and a second terminal of the fourth containment vessel pressure measurement instrument is connected to the processor and is configured to transmit a flow rate measured by the fourth containment vessel pressure measurement instrument to the processor;
the first containment vessel external pressure comparison monitoring subunit and the second containment vessel external pressure comparison monitoring subunit are provided on both opposite sides of the containment vessel.

In an embodiment, the instrument monitoring assembly may include a temperature instrument monitoring unit and a humidity instrument monitoring unit;
the temperature instrument monitoring unit may include at least one temperature instrument connected to the processor and configured to transmit a temperature value measured by the temperature instrument to the processor;
the humidity instrument monitoring unit may include at least one humidity instrument connected to the processor and configured to transmit a humidity value measured by the humidity instrument to the processor.

In an embodiment, the instrument monitoring assembly may include a hydrogen concentration monitoring unit, an alarm monitoring unit, and other monitoring units; the hydrogen concentration monitoring unit, the alarm monitoring unit, and other monitoring units are respectively connected to the processor.

In the second aspect of the present application, an overall leakage rate monitoring method for a containment vessel is provided, which is applied to the overall leakage rate monitoring apparatus for the containment vessel in the first aspect, the monitoring method may include:
acquiring measured parameters inside nuclear reactor containment vessel;
determining a monitoring result of the containment vessel overall leakage rate according to the measured parameters inside the containment vessel.

In the third aspect of the present application, an overall leakage rate monitoring apparatus for a containment vessel is provided, which may include:
an acquisition module configured to acquire measured parameters inside nuclear reactor containment vessel;
a determination module configured to determine a monitoring result of the containment vessel overall leakage rate according to the measured parameters inside the containment vessel.

In the fourth aspect of the present application, a computer device is provided, which may include a processor and a memory storing a computer program. The processor, when executing the computer program, may implement the method in the second aspect.

In the fifth aspect of the present application, a computer-readable storage medium is provided, on which a computer program is stored. The computer program, when executed by a processor, may cause the processor to implement the method in the second aspect.

In the sixth aspect of the present application, a computer program product is provided, which includes a computer program. The computer program, when executed by a processor, may cause the processor to implement the method in the second aspect.

The above-mentioned overall leakage rate monitoring apparatus and method for the containment vessel may include a flow monitoring assembly, a pressure monitoring assembly, a pressure comparison monitoring assembly, an instrument monitoring assembly and a processor. Different types of parameters inside the containment vessel are monitored by setting different monitoring assemblies, such arrangement fully considers the pressure relief flow value inside the containment vessel, the pressure value inside the containment vessel, the pressure comparison value between the pressure values inside and outside the containment vessel, and the temperature and humidity values inside the containment vessel required for the containment vessel leakage rate test. The overall leakage rate monitoring apparatus for the containment vessel provided in the present application can accurately and completely acquire the data required for calculating the containment vessel leakage rate, which can provide a reasonable and scientific configuration method for the nuclear reactor containment vessel leakage rate test instrument, and implement a breakthrough in the configuration method for the nuclear reactor containment vessel leakage rate test instrument. In addition, by connecting the monitoring assemblies to the processor, different types of parameter values collected by the monitoring assemblies can be input into the processor, the processor calculates and processes the received data, the containment vessel overall leakage rate can be accurately obtained according to the processing result, so that the efficiency of the containment vessel overall leakage rate test and the accuracy of the monitoring result are improved.

### BRIEF DESCRIPTION OF THE DRAWINGS

FIG. 1 is a schematic diagram illustrating an overall leakage rate monitoring apparatus for a containment vessel according to an embodiment.
FIG. 2 is a schematic diagram illustrating an overall leakage rate monitoring apparatus for a containment vessel according to another embodiment.
FIG. 3 is a schematic diagram illustrating an overall leakage rate monitoring apparatus for a containment vessel according to another embodiment.
FIG. 4 is a schematic diagram illustrating an overall leakage rate monitoring apparatus for a containment vessel according to another embodiment.
FIG. 5 is a schematic diagram illustrating an overall leakage rate monitoring apparatus for a containment vessel according to another embodiment.
FIG. 6 is a schematic diagram illustrating an overall leakage rate monitoring apparatus for a containment vessel according to another embodiment.
FIG. 7 is a schematic diagram illustrating an overall leakage rate monitoring apparatus for a containment vessel according to another embodiment.
FIG. 8 is a schematic diagram illustrating an overall leakage rate monitoring apparatus for a containment vessel according to another embodiment.
FIG. 9 is a schematic diagram illustrating an overall leakage rate monitoring apparatus for a containment vessel according to another embodiment.
FIG. 10 is a schematic diagram illustrating an overall leakage rate monitoring apparatus for a containment vessel according to another embodiment.
FIG. 11 is a schematic diagram illustrating an overall leakage rate monitoring apparatus for a containment vessel according to another embodiment.
FIG. 12 is a schematic diagram illustrating an overall leakage rate monitoring apparatus for a containment vessel according to another embodiment.
FIG. 13 is a flow chart showing an overall leakage rate monitoring method for a containment vessel according to an embodiment.
FIG. 14 is a structural block diagram of an overall leakage rate monitoring apparatus for a containment vessel according to an embodiment.
FIG. 15 is an internal structure diagram of a computer device according to an embodiment.

### Reference signs:

1, flow monitoring assembly; 2, pressure monitoring assembly;
3, pressure comparison monitoring assembly; 4, instrument monitoring assembly;
5, processor; 10, first containment vessel isolation valve unit;
11, drainage unit; 12, pressure relief pipeline monitoring unit;
20, second containment vessel isolation valve unit; 21, pressure measurement unit;
30, containment vessel internal pressure comparison monitoring unit; 31, containment vessel external pressure comparison monitoring unit;
40, temperature instrument monitoring unit; 41, humidity instrument monitoring unit; 42, hydrogen concentration monitoring unit; 43, alarm monitoring unit;
44, other monitoring units; 101, first containment vessel penetration member;
102, first containment vessel internal isolation valve; 103, first containment vessel external isolation valve;
111, first drainage isolation valve; 112, drainage pit;
121, pressure relief pipeline isolation valve; 122, pressure relief pipeline main flow regulating valve;
123, pressure relief pipeline test flow regulation valve; 124, measurement orifice plate;
125, upstream flow measurement root valve; 126, downstream flow measurement root valve;
127, flow measurement instrument; 128, check valve;
129, second drainage isolation valve; 130, auxiliary exhaust valve;
131, pressure relief main airflow discharge chamber; 201, second containment vessel penetration member;
202, second containment vessel internal isolation valve; 203, second containment vessel external isolation valve;
211, first containment vessel pressure measurement subunit; 212, second containment vessel pressure measurement subunit;
301, containment vessel pressure measurement instrument; 311, first containment vessel external pressure comparison monitoring subunit;
312, second containment vessel external pressure comparison monitoring subunit; 401, temperature instrument;
402, humidity instrument; 2111, first containment vessel pressure measurement primary diaphragm valve;
2112, first containment vessel pressure measurement secondary diaphragm valve; 2113, first pressure measurement root valve;
2114, first containment vessel pressure measurement instrument; 2121, second containment vessel pressure measurement primary diaphragm valve;
2122, second containment vessel pressure measurement secondary diaphragm valve; 2123, second pressure measurement root valve;
2124, second containment vessel pressure measurement instrument; 3111, third containment vessel penetration member;
3112, third containment vessel external isolation valve; 3113, third containment vessel pressure measurement instrument;
3121, fourth containment vessel penetration member; 3122, fourth containment vessel external isolation valve;
3123, fourth containment vessel pressure measurement instrument.

### DETAILED DESCRIPTION

In order to make the purpose, the technical solution, and advantages of the present invention clearer to understand, the present invention is elaborated below in conjunction with the accompanying drawings and embodiments. It should be appreciated that the specific embodiments described herein are merely used for explaining the present invention, rather than limiting the present application.

The purpose of the overall leakage rate test of the nuclear reactor containment vessel in the nuclear power plant is to measure an overall leakage rate of the containment vessel on the designed pressure platform during the test of the containment vessel, to verify whether the tightness of the containment vessel satisfies the design requirement. Generally, data of the temperature and humidity, etc., inside the containment vessel is collected by a containment vessel leakage rate data collection system, in order to calculate a containment vessel overall leakage rate by means of the collected data. At present, for a large-space internal monitoring sensor configuration method such as for the containment vessel, there is a lack of a mature theoretical method, accordingly a field survey method is generally selected based on an empirical method, and a representative location is manually selected for arranging a monitoring sensor. Therefore, a configuration method for an overall leakage rate test instrument of a nuclear reactor containment vessel is missing from the conventional technology. For the above problem, the present application proposes a containment vessel overall leakage rate monitoring apparatus and method that are applicable to an overall leakage rate test of a nuclear reactor containment vessel in a nuclear power plant, to address the lack of a configuration method for a nuclear reactor containment vessel overall leakage rate test instrument.

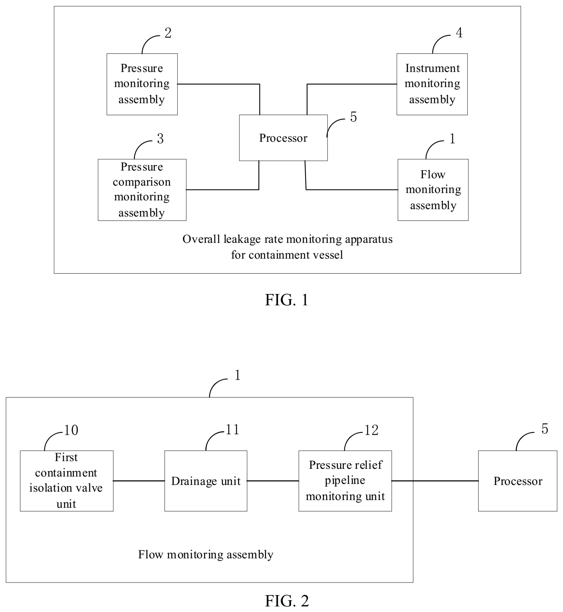

In an embodiment, as shown in FIG. 1, a containment vessel overall leakage rate monitoring apparatus is provided. The monitoring apparatus may include a flow monitoring assembly 1, a pressure monitoring assembly 2, a pressure comparison monitoring assembly 3, an instrument monitoring assembly 4, and a processor 5. The flow monitoring assembly 1, the pressure monitoring assembly 2, the pressure comparison monitoring assembly 3, and the instrument monitoring assembly 4 are respectively connected to the processor 5. The flow monitoring assembly 1 is configured to monitor a pressure relief flow value inside the containment vessel. The pressure monitoring assembly 2 is configured to monitor a pressure value inside the containment vessel. The pressure comparison monitoring assembly 3 is configured to monitor a pressure comparison value between the pressure values inside and outside the containment vessel. The instrument monitoring assembly 4 is configured to monitor a temperature and humidity inside the containment vessel. The processor 5 is configured to obtain an overall leakage rate of the containment vessel according to the pressure relief flow value, the pressure value, the pressure comparison value, and the temperature and humidity.

It should be noted that the containment vessel of the nuclear reactor refers to a vertical cylindrical hemispherical top cover or a spherical sealed metal or concrete housing which encloses and protects main devices of the nuclear reactor. The main devices of a power reactor inside the containment vessel may include a reactor, a steam generator, a main pump, a regulator, valves of inlet and outlet pipelines of a coolant, etc. A spraying system is provided inside the containment vessel to release a large quantity of spray water mist when a serious accident occurs, to absorb radioactive iodine and flush radioactive dust inside the containment vessel. Accordingly, it is important to maintain the integrity of the containment vessel, and an overall leakage rate test needs to be performed on the containment vessel to verify the tightness of the containment vessel.

The flow monitoring assembly 1 is configured to collect a pressure relief flow value inside the containment vessel. The pressure monitoring assembly 2 is configured to collect a pressure value inside the containment vessel, the pressure value may be an intensity of pressure generated during a reaction process of the nuclear reactor. The pressure comparison monitoring assembly 3 is configured to calculate, according to the collected pressure value inside the containment vessel and pressure value outside the containment vessel, a comparison value of the pressure values received inside and outside the containment vessel. The instrument monitoring assembly is configured to collect a temperature and humidity inside the containment vessel. The processor 5 is configured to calculate an overall leakage rate of the containment vessel according to parameter values collected by different monitoring assemblies.

In the embodiment, each monitoring assembly may be arranged in a corresponding position inside the containment vessel according to a type of the data collected by each monitoring assembly. Different monitoring assemblies are configured to monitor different types of data. The monitoring assemblies may be connected to the processor 5 respectively, and a connection channel between each monitoring assembly and the processor 5 is established. When each monitoring assembly collects the corresponding data, the collected data is transmitted to the processor 5 through the connection channel. Optionally, each monitoring assembly may be wired to the processor 5, or each monitoring assembly may be wirelessly connected to the processor 5, which is not limited herein.

The above-mentioned containment vessel overall leakage rate monitoring apparatus may include a flow monitoring assembly, a pressure monitoring assembly, a pressure comparison monitoring assembly, an instrument monitoring assembly, and a processor. Different monitoring assemblies are provided to monitor different types of parameters inside the containment vessel, such arrangement fully considers the pressure relief flow value inside the containment vessel, the pressure value inside the containment vessel, the pressure comparison value between the pressure values inside and outside the containment vessel, and the temperature and humidity inside the containment vessel. With the containment vessel overall leakage rate monitoring apparatus provided in the present application, accurate and complete data required for calculating the containment vessel leakage rate can be obtained, so that a reasonable configuration method can be provided for the leakage rate test instrument of the nuclear reactor. In addition, the monitoring assemblies are connected to the processor, and different types of parameter values collected by the monitoring assemblies can be input into the processor. The processor calculates and processes the received data, so that the containment vessel overall leakage rate can be accurately obtained according to a processing result, thereby improving the efficiency of the containment vessel overall leakage rate test and the accuracy of the monitoring result.

The flow monitoring assembly will be described in detail. In an embodiment, as shown in FIG. 2, the flow monitoring assembly 1 may include a first containment vessel isolation valve unit 10, a drainage unit 11, and a pressure relief pipeline monitoring unit 12. The first containment vessel isolation valve unit 10 is provided inside the containment vessel. Both the drainage unit 11 and the pressure relief pipeline monitoring unit 12 are provided outside the containment vessel. The first containment vessel isolation valve unit 10 is connected to the drainage unit 11, and the drainage unit 11 is connected to the processor 5 through the pressure relief pipeline monitoring unit 12, and is configured to transmit the flow value monitored by the flow monitoring assembly to the processor 5.

The first containment vessel isolation valve unit 10 is configured to isolate a fluid generated by the nuclear reactor inside the containment vessel. In addition, the first containment vessel isolation valve unit 10 may be further configured to regulate a flow rate of a pressure relief fluid inside the containment vessel.

It should be noted that, in the containment vessel overall leakage rate test, the pressure relief gas may condense into water vapor. Accordingly, the drainage unit 11 may be provided in the flow monitoring assembly 1, and configured to collect the condensed water which may exist in a pressure relief phase and a pressurization phase of the containment vessel overall leakage rate test.

The pressure relief pipeline monitoring unit 12 may be configured to monitor an emission of the pressure relief gas in the pressure relief phase of the containment vessel overall leakage rate test.

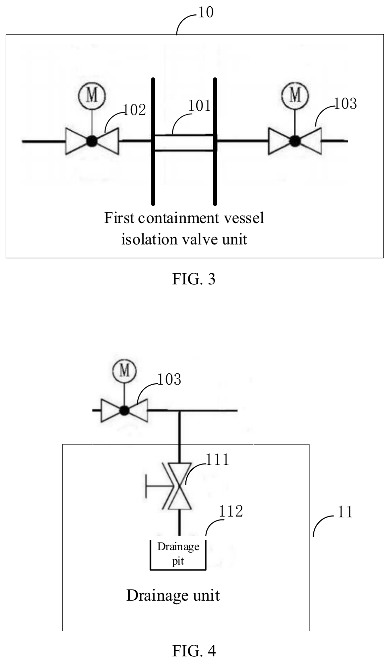

In an optional implementation mode, as shown in FIG. 3, the first containment vessel isolation valve unit 10 may include a first containment vessel penetration member 101, a first containment vessel internal isolation valve 102, and a first containment vessel external isolation valve 103. The first containment vessel internal isolation valve 102 is provided inside the containment vessel, and the first containment vessel external isolation valve 103 is provided outside the containment vessel. A first terminal of the first containment vessel internal isolation valve 102 is provided inside the containment vessel, a second terminal of the first containment vessel internal isolation valve 102 is connected to a first terminal of the first containment vessel penetration member 101, and a second terminal of the first containment vessel penetration member 101 is connected to a first terminal of the first containment vessel external isolation valve 103.

The first containment vessel penetration member 101 is a device configured to communicate the inside and the outside of the containment vessel, and may be provided on the containment vessel. The first containment vessel internal penetration valve 102 may be provided inside the containment vessel, and is configured to control a flow rate of the gas inside the containment vessel. Optionally, the first containment vessel internal penetration valve 102 may be a manual isolation valve, or an automatic isolation valve. The first containment vessel external isolation valve 103 may be provided outside the containment vessel and configured to receive a fluid inside the containment vessel which is transmitted by the first containment vessel internal isolation valve 102 through the first containment vessel penetration member 101.

In another optional implementation mode, as shown in FIG. 4, the drainage unit 11 may include a first drainage isolation valve 111 and a drainage pit 112. A first terminal of the first drainage isolation valve 111 is connected to the drainage pit 112, and a second terminal of the first drainage isolation valve 111 is connected to a second terminal of the first containment vessel external isolation valve 103.

The drainage pit 112 may be provided in a lower position outside the containment vessel. The first drainage isolation valve 111 may receive, by connecting to the first containment vessel external isolation valve 103, condensed water inside the containment vessel transmitted by the first containment vessel external isolation valve 103, and transmit the condensed water to the drainage pit 112.

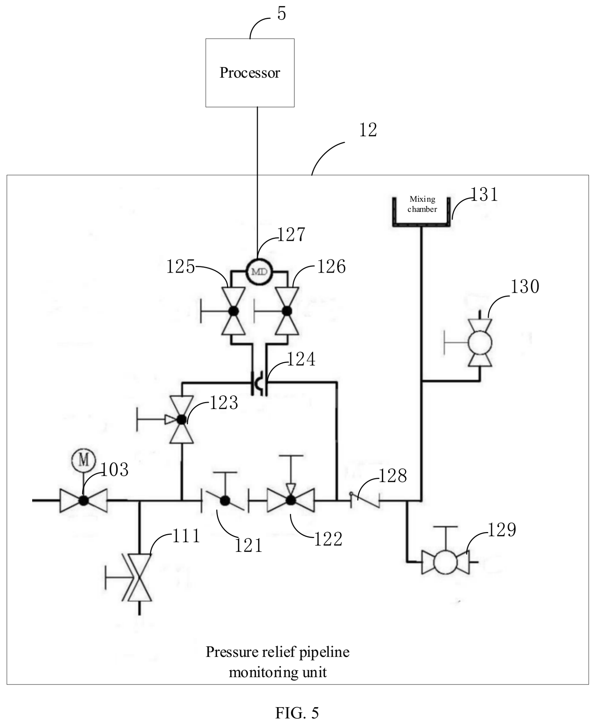

In another optional implementation mode, as shown in FIG. 5, the pressure relief pipeline monitoring unit 12 may include a pressure relief pipeline isolation valve 121, a pressure relief pipeline main flow regulation valve 122, a pressure relief pipeline test flow regulation valve 123, a measurement orifice plate 124, an upstream flow measurement root valve 125, a downstream flow measurement root valve 126, a flow measurement instrument 127, a check valve 128, a second drainage isolation valve 129, an auxiliary exhaust valve 130, and a pressure relief main airflow discharge chamber 131. A first terminal of the pressure relief pipeline isolation valve 121 is connected to a convergence point of the first terminal of the first containment vessel external isolation valve 103, a second terminal of the first drainage isolation valve 111, and a first terminal of the pressure relief pipeline test flow regulation valve. A second terminal of the pressure relief pipeline test flow regulation valve is connected to the measurement orifice plate 124. A second terminal of the pressure relief pipeline isolation valve 121 is connected to a first terminal of the pressure relief pipeline main flow regulation valve 122. A second terminal of the pressure relief pipeline main flow regulation valve 122 is connected to the measurement orifice plate 124, and a convergence point of a first terminal of the check valve 128, a first terminal of the second drainage isolation valve, a first terminal of the auxiliary exhaust valve 130, and the pressure relief main airflow discharge chamber 131 respectively. The measurement orifice plate 124 is further connected to a first terminal of the upstream flow measurement root valve 125 and a first terminal of the downstream flow measurement root valve 126 respectively. Both a second terminal of the upstream flow measurement root valve 125 and a second terminal of the downstream flow measurement root valve 126 are connected to a terminal of the flow measurement instrument 127. A second terminal of the flow measurement instrument 127 is connected to the processor 5, and is configured to transmit a flow rate measured by the flow measurement instrument 127 to the processor 5. A second terminal of the check valve 128 is connected to the second drainage isolation valve 129 and the first terminal of the auxiliary exhaust valve 130 respectively, and a second terminal of the auxiliary exhaust valve 130 is connected to the pressure relief main airflow discharge chamber 131.

It should be appreciated that the first terminal of the first containment vessel external isolation valve 103, the second terminal of the first drainage isolation valve 111, and the first terminal of the pressure relief pipeline test flow regulation valve 123 may be connected to the same convergence point, so that the first terminal of the pressure relief pipeline isolation valve 121 is connected to the convergence point, and the pressure discharge flow inside the containment vessel needing to be discharged through the first containment vessel external isolation valve 103 can be regulated by the pressure relief pipeline test flow regulation valve 123. Accordingly, the regulated pressure discharge flow is transmitted through the pressure relief pipeline test flow regulation valve 123 to the measurement orifice plate 124, through the measurement orifice plate 124 to the upstream flow measurement root valve 125, and through the upstream flow measurement root valve 125 to the flow measurement instrument 127, to collect the flow value of the upstream pressure inside the containment vessel.

By connecting the second terminal of the pressure relief pipeline isolation valve 121 to the pressure relief pipeline main flow regulation valve 122, the pressure discharge flow transmitted through the pressure relief pipeline isolation valve 121 can be regulated, the regulated pressure value is transmitted to the downstream flow measuring root valve 126 through the measurement orifice plate 124, and transmitted to the flow measuring instrument 127 through the downstream flow measuring root valve 126, to collect the flow value of the downstream pressure inside the containment vessel.

The flow measurement instrument 127 transmits the collected flow values corresponding to the upstream pressure and the downstream pressure inside the containment vessel to the processor 5, to calculate with the collected pressure flow values by the processor 5 and obtain the containment vessel overall leakage rate according to a calculation result.

The pressure relief pipeline main flow regulation valve 122 is connected to the check valve 128, and the check valve 128 is connected to the second drainage isolation valve, the auxiliary exhaust valve, and the pressure relief main airflow discharge chamber 131 respectively, so that the regulated pressure discharge flow can be transmitted to the pressure relief main airflow discharge chamber 131, and discharged from the containment vessel through the pressure relief main airflow discharge chamber 131. The check valve 128 can prevent the pressure from flowing back into the containment vessel.

In the embodiment, the flow monitoring assembly can accurately collect the pressure relief flow value of the fluid inside the containment vessel by means of the first containment vessel isolation valve unit, so that the collected pressure relief flow value of the fluid can be transmitted to the processor through the drainage unit and the pressure relief pipeline monitoring unit, accordingly the pressure relief flow value inside the containment vessel can be accurately obtained. In addition, since the collected flow value of the fluid is transmitted to the processor, and the processor can calculate with the flow value, thereby improving the accuracy of the containment vessel overall leakage rate calculated according to the pressure relief flow value.

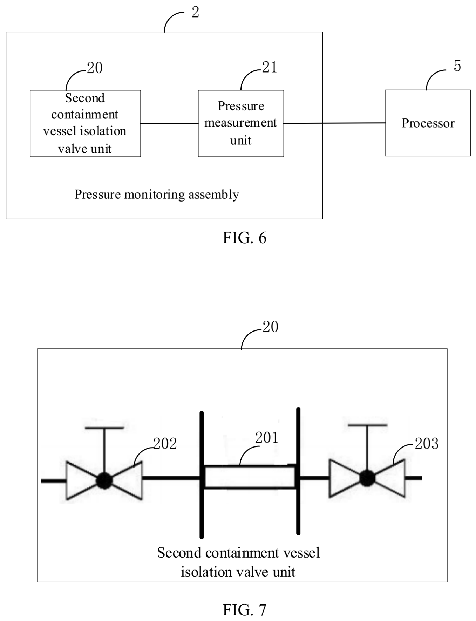

The pressure monitoring assembly 2 will be described in detail below. In an embodiment, as shown in FIG. 6, the pressure monitoring assembly 2 may include a second containment vessel isolation valve unit 20 and a pressure measurement unit 21. The second containment vessel isolation valve unit 20 is connected to the processor 5 through the pressure measurement unit 21, and is configured to transmit the pressure value monitored by the pressure monitoring assembly 2 to the processor 5.

In an optional implementation mode, as shown in FIG. 7, the second containment vessel isolation valve unit 20 may include a second containment vessel penetration member 201, a second containment vessel internal isolation valve 202, and a second containment vessel external isolation valve 203. The second containment vessel internal isolation valve 202 is provided inside the containment vessel, and the second containment vessel external isolation valve 203 is provided outside the containment vessel. A first terminal of the second containment vessel internal isolation valve 202 is provided inside the containment vessel, a second terminal of the second containment vessel internal isolation valve 202 is connected to a first terminal of the second containment vessel penetration member 201, and a second terminal of the second containment vessel penetration member 201 is connected to a first terminal of the second containment vessel external isolation valve 203.

In the embodiment, the second containment vessel internal isolation valve 202 may be provided inside the containment vessel, and the second containment vessel external isolation valve 203 may obtain, through the second containment vessel penetration member 201, a pressure value inside the containment vessel collected by the second containment vessel internal isolation valve 202.

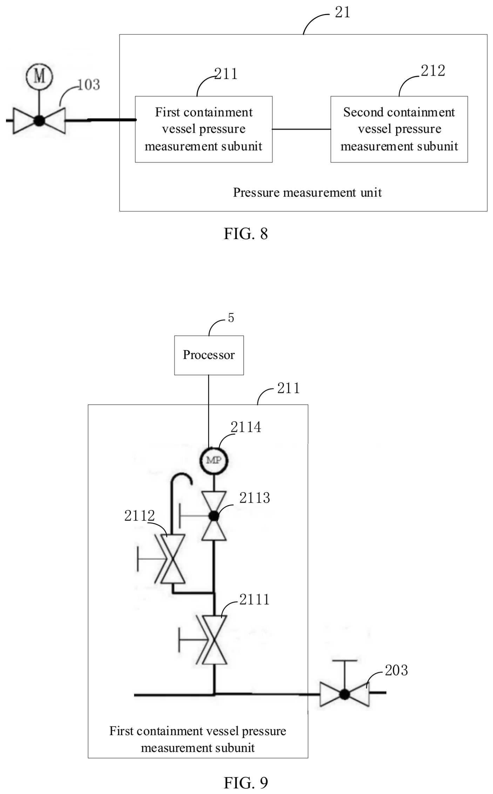

In another optional implementation mode, as shown in FIG. 8, the pressure measurement unit 21 may include a first containment vessel pressure measurement subunit 211 and a second containment vessel pressure measurement subunit 212. The first containment vessel pressure measurement subunit 211 is connected to a second terminal of the second containment vessel external isolation valve 203 and the second containment vessel pressure measurement subunit 212 respectively. The first containment vessel pressure measurement subunit 211 and the second containment vessel pressure measurement subunit 212 are connected to each other in parallel, and are configured to mutually verify the measured pressure values.

It should be appreciated that, in order to improve the accuracy of the collected pressure value, two containment vessel pressure measurement subunits may be provided to collect the pressure values, and the two containment vessel pressure measurement subunits may be connected to each other in parallel to collect the pressure values, and perform mutual verification according to the collected results.

As shown in FIG. 9, the first containment vessel pressure measurement subunit 211 may include a first containment vessel pressure measurement primary diaphragm valve 2111, a first containment vessel pressure measurement secondary diaphragm valve 2112, a first pressure measurement root valve 2113, and a first containment vessel pressure measurement instrument 2114. A first terminal of the first containment vessel pressure measurement primary diaphragm valve 2111 is connected to a second terminal of the second containment vessel external isolation valve 203, a second terminal of the first containment vessel pressure measurement primary diaphragm valve 2111 is connected to a convergence point of a first terminal of the first containment vessel pressure measurement secondary diaphragm valve 2112 and a first terminal of the first pressure measurement root valve 2113, a second terminal of the first pressure measurement root valve 2113 is connected to a first terminal of the first containment vessel pressure measurement instrument 2114, a second terminal of the first containment vessel pressure measurement instrument 2114 is connected to the processor 5 and is configured to transmit a flow rate measured by the first containment vessel pressure measurement instrument 2114 to the processor 5.

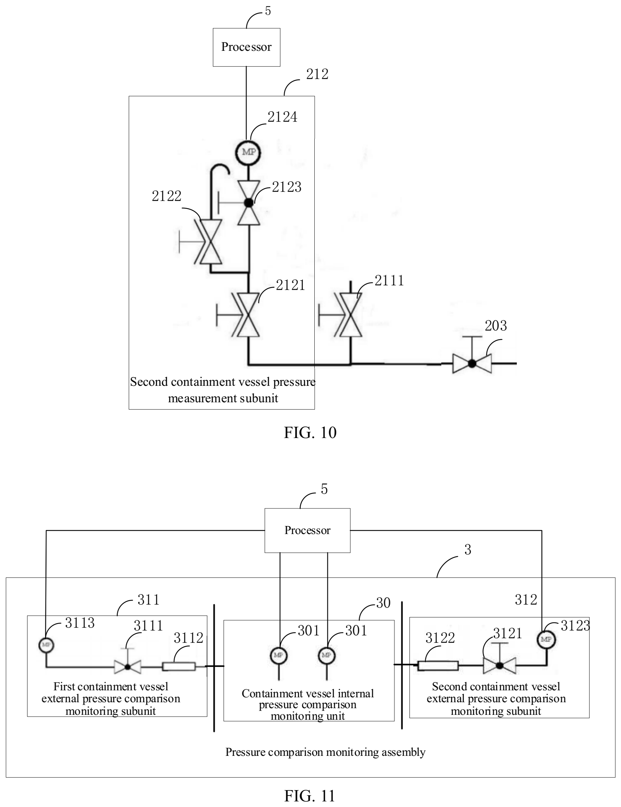

As shown in FIG. 10, the second containment vessel pressure measurement subunit 212 may include a second containment vessel pressure measurement primary diaphragm valve 2121, a second containment vessel pressure measurement secondary diaphragm valve 2122, a second pressure measurement root valve 2123, and a second containment vessel pressure measurement instrument 2124. A first terminal of the second containment vessel pressure measurement primary diaphragm valve 2121 is connected to a convergence point of the first terminal of the first containment vessel pressure measurement primary diaphragm valve 2111 and the first terminal of the second containment vessel external solation valve 203. A second terminal of the second containment vessel pressure measurement primary diaphragm valve 2121 is connected to a convergence point of a first terminal of the second containment vessel pressure measurement secondary diaphragm valve 2122 and a first terminal of the second pressure measurement root valve 2123. A second terminal of the second pressure measurement root valve 2123 is connected to the second containment vessel pressure measurement instrument 2124. A second terminal of the second containment vessel pressure measurement instrument 2124 is connected to the processor 5, and is configured to transmit a flow rate measured by the second containment vessel pressure measurement instrument 2124 to the processor 5.

In the embodiment, the first containment vessel pressure measurement subunit 211 may acquire the pressure value inside the containment vessel by means of the second containment vessel external isolation valve 203 and transmit the acquired pressure value inside the containment vessel to the first containment vessel pressure measurement instrument 2114, and the first containment vessel pressure measurement instrument 2114 transmits the pressure value to the processor 5. The second containment vessel pressure measurement subunit may also acquire the pressure value inside the containment vessel by means of the second containment vessel external isolation valve 203 and transmit the acquired pressure value inside the containment vessel to the second containment vessel pressure measurement instrument 2124, and the second containment vessel pressure measurement instrument 2124 transmits the pressure value to the processor 5. After receiving the two pressure values, the processor 5 may compare the two pressure values to determine an error value between the collected pressure values, accordingly the accuracy of the pressure value collected by the monitoring assembly 2 is improved.

In the embodiment, the pressure monitoring assembly can accurately collect the pressure value inside the containment vessel by means of the second containment vessel isolation valve unit, so that the pressure measurement unit can transmit the collected pressure value to the processor in order to accurately acquire the pressure value inside the containment vessel. In addition, since the collected pressure value is transmitted to the processor, the processor can calculate with the pressure value, so that the accuracy of the containment vessel overall leakage rate calculated according to the pressure value can be improved.

The pressure comparison monitoring assembly 3 will be described in detail below. In an embodiment, as shown in FIG. 11, the pressure comparison monitoring assembly 3 may include a containment vessel internal pressure comparison monitoring unit 30 and a containment vessel external pressure comparison monitoring unit 31. The containment vessel internal pressure comparison monitoring unit 30 may include at least one containment vessel pressure measurement instrument 301. The containment vessel pressure measurement instrument 301 is connected to the processor 5. The containment vessel external pressure comparison monitoring unit 31 may include a first containment vessel external pressure comparison monitoring subunit 311 and a second containment vessel external pressure comparison monitoring subunit 312.

Referring to FIG. 11, as an example, the first containment vessel external pressure comparison monitoring subunit 311 may include a third containment vessel penetration member 3111, a third containment vessel external isolation valve 3112, and a third containment vessel pressure measurement instrument 3113. A first terminal of the third containment vessel penetration member 3111 is connected to the containment vessel, a second terminal of the third containment vessel penetration member 3111 is connected to a first terminal of the third containment vessel external isolation valve 3112, a second terminal of the third containment vessel external isolation valve 3112 is connected to a first terminal of the third containment vessel pressure measurement instrument 3113, and a second terminal of the third containment vessel pressure measurement instrument 3113 is connected to the processor 5, in order to transmit the flow rate measured by the third containment vessel pressure measurement instrument 3113 to the processor 5.

Referring to FIG. 11, as an example, the second containment vessel external pressure comparison monitoring subunit 312 may include a fourth containment vessel penetration member 3121, a fourth containment vessel external isolation valve 3122, and a fourth containment vessel pressure measurement instrument 3123. A first terminal of the fourth containment vessel penetration member 3121 is connected to the containment vessel, a second terminal of the fourth containment vessel penetration member 3121 is connected to a first terminal of the fourth containment vessel external isolation valve 3122, a second terminal of the fourth containment vessel external isolation valve 3122 is connected to a first terminal of the fourth containment vessel pressure measurement instrument 3123, and a second terminal of the fourth containment vessel pressure measurement instrument 3123 is connected to the processor 5, in order to transmit the flow rate measured by the fourth containment vessel pressure measurement instrument 3123 to the processor 5.

It should be appreciated that the nuclear reactor containment vessel is generally a large-space housing, accordingly two containment vessel external pressure comparison monitoring subunits may be provided at different positions on the containment vessel, to measure the containment vessel external pressure value. The first containment vessel external pressure comparison monitoring subunit 311 and the second containment vessel external pressure comparison monitoring subunit 312 are provided on both opposite sides of the containment vessel, to improve the accuracy of the measured containment vessel external pressure value.

In the embodiment, the pressure comparison monitoring assembly includes the containment vessel internal pressure comparison monitoring unit and the containment vessel external pressure comparison monitoring unit. The containment vessel pressure measurement instrument in the containment vessel internal pressure comparison monitoring unit can accurately measure the containment vessel internal pressure value, and transmit the collected pressure value to the processor. The first containment vessel external pressure comparison monitoring subunit and the second containment vessel external pressure comparison monitoring subunit in the containment vessel external pressure comparison monitoring unit can accurately collect the containment vessel external pressure values at different positions on the containment vessel respectively, accordingly the pressure comparison value of the containment vessel internal pressure value and the containment vessel external pressure value can be accurately obtained according to the containment vessel internal pressure value and the containment vessel external pressure value. In addition, since the collected pressure value can be transmitted to the processor, the pressure comparison value of the containment vessel internal pressure value and the containment vessel external pressure value can be quickly obtained, thereby improving the accuracy and efficiency of obtaining the pressure comparison value.

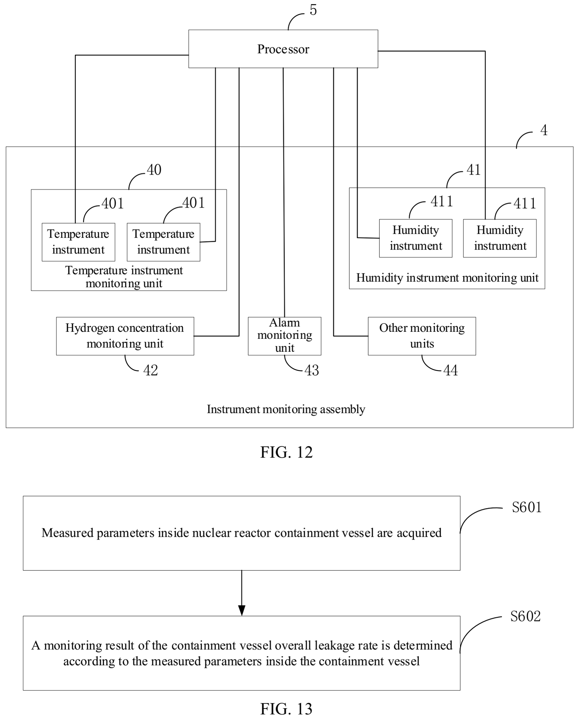

The instrument monitoring assembly will be described in detail below. In an embodiment, as shown in FIG. 12, the instrument monitoring assembly 4 may include a temperature instrument monitoring unit 40 and a humidity instrument monitoring unit 41. The temperature instrument monitoring unit 40 may include at least one temperature instrument 401. The temperature instrument 401 is connected to the processor 5, and is configured to transmit a temperature value measured by the temperature instrument 401 to the processor 5. The humidity instrument monitoring unit 41 may include at least one humidity instrument 411. The humidity instrument 411 is connected to the processor 5, and is configured to transmit a humidity value measured by the humidity instrument 411 to the processor 5.

In an optional implementation mode, referring to FIG. 12, the instrument monitoring assembly may further include a hydrogen concentration monitoring unit 42, an alarm monitoring unit 43, and other monitoring units 44. The hydrogen concentration monitoring unit, the alarm monitoring unit, and other monitoring units are respectively connected to the processor.

In an optional implementation mode, the temperature instrument 401 and the humidity instrument 402 can be provided inside the containment vessel according to a large-space unit division principle. Optionally, the division principle may be that a maximum solvent coefficient of each instrument is less than or equal to 1, or the division principle may be that the number of the temperature instruments is set according to a temperature energy field inside the containment vessel, or that the number of the humidity instruments is set according to a humidity energy field inside the containment vessel.

In a process during which a built-in refueling large water tank or water pool is configured inside the containment vessel and the containment vessel overall leakage rate test is performed by using the containment vessel overall leakage rate monitoring apparatus provided in the present application, a control body of the built-in refueling large water tank or water pool needs to be temporarily closed according to a characteristic of the built-in refueling large water tank or water pool, to eliminate the impact of the built-in refueling large water tank or the water pool full of water on the containment vessel internal overall humidity during the containment vessel overall leakage rate test, which effectively reduces the number of humidity instruments and guarantees the measurement accuracies of the humidity instruments.

In the embodiment, the instrument monitoring assembly can accurately collect the temperature value inside the containment vessel by means of the temperature instrument monitoring unit, and accurately collect the humidity value inside the containment vessel by means of the humidity instrument monitoring unit, accordingly the accuracy of acquiring the temperature and humidity values inside the containment vessel. Because the collected temperature and humidity values can be transmitted to the processor, the processor can rapidly convert the temperature and humidity values into parameters related to the containment vessel overall leakage rate, thereby improving the accuracy of the determination of the containment vessel overall leakage rate.

It should be noted that if the containment vessel is a single layer, only a space range enclosed by an inner wall surface of the containment vessel needs to be considered, and each monitoring assembly in the containment vessel overall leakage rate monitoring apparatus provided in the present application can be set according to an actual geometric size and a parameter of the containment vessel. Optionally, a device configured inside the containment vessel may be a large space dehydrogenation unit (such as a passive hydrogen autocatalytic recombiner), an ignition unit, a zeolite dehydrogenation unit, an air purification unit, a nuclide, or other air-borne pollutant absorption units.

In an embodiment, the present application further provides a containment vessel overall leakage rate monitoring method, the monitoring method can be applied to the containment vessel overall leakage rate monitoring apparatus described in any one of the above embodiments. As shown in FIG. 13, the method may include the following steps.

S601: measured parameters inside nuclear reactor containment vessel are acquired.

The measured parameters may include a pressure relief flow value inside the containment vessel, a pressure value inside the containment vessel, a pressure comparison value between the pressure values inside and outside the containment vessel, and temperature and humidity values inside the containment vessel.

In the embodiment, the flow monitoring assembly is provided to collect the pressure relief flow value inside the containment vessel, the pressure monitoring assembly is provided to collect the pressure value inside the containment vessel, the pressure comparison monitoring assembly is provided to collect the pressure comparison value between the pressure values inside and outside the containment vessel, and the instrument monitoring assemblies are provided to collect the temperature and humidity values inside the containment vessel, to obtain the measured parameters inside the nuclear reactor containment vessel.

S602: a monitoring result of the containment vessel overall leakage rate is determined according to the measured parameters inside the containment vessel.

In the embodiment, the measured parameters acquired inside the containment vessel may be transmitted to the processor, the processor may calculate with the received measured parameters, and convert the measured parameters into parameter values related to the containment vessel overall leakage rate according to a corresponding conversion formula, to obtain the containment vessel overall leakage rate, and determine the monitoring result of the containment vessel overall leakage rate according to the containment vessel overall leakage rate.

In the embodiment, the measured parameters in the nuclear reactor containment vessel are acquired, the accurate containment vessel overall leakage rate can be obtained by calculating with the measured parameters inside the containment vessel, so that the tightness of the containment vessel can be evaluated according to the containment vessel overall leakage rate, and the accuracy of the evaluation of the tightness of the containment vessel can be improved.

It should be appreciated that, although steps in the flow charts related to the aforementioned embodiments are displayed in an order indicated by the arrows, these steps are not definitely performed in the order indicated by the arrows. Unless expressly stated in the specification, these steps are not performed in a strict order, and these steps may be performed in other orders. In addition, at least a part of steps in the flow charts involved in the aforementioned embodiments may include multiple steps or multiple phases. These steps or phases are not definitely performed at a same moment, but may be performed at different moments. These steps or phases are not definitely performed sequentially, but may be performed in turns or alternately with at least a part of steps or steps or phases in other steps.

Based on the same inventive concept, in an embodiment of the present invention, a containment vessel overall leakage rate monitoring apparatus for implementing the above-mentioned containment vessel overall leakage rate monitoring method is provided. An implementation solution provided by the apparatus is similar to the implementation solution described in the aforementioned method, so that for the specific limitations in the following provided embodiments of the containment vessel overall leakage rate monitoring apparatus, reference can be made to the aforementioned limitations on the containment vessel overall leakage rate monitoring method, and the details are not repeated herein.

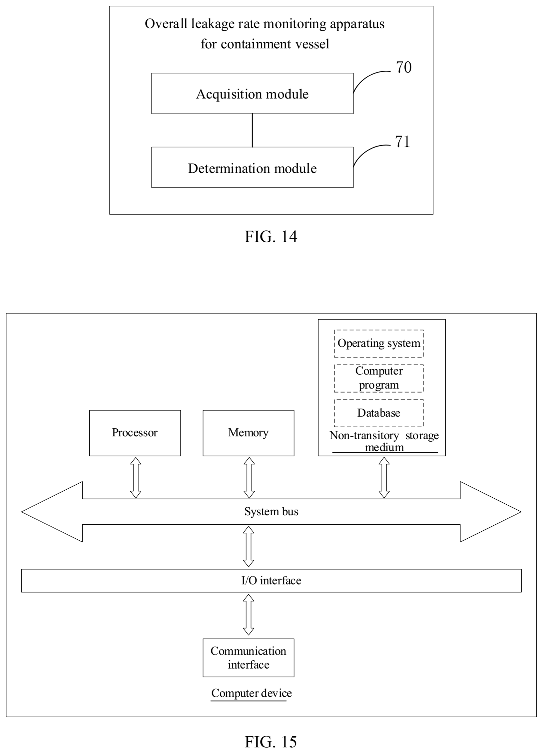

In an embodiment, as shown in FIG. 14, a containment vessel overall leakage rate monitoring apparatus is provided, which may include an acquisition module 70 and a determination module 71.

The acquisition module 70 is configured to acquire measured parameters inside nuclear reactor containment vessel.

The determination module 71 is configured to determine a monitoring result of the containment vessel overall leakage rate according to the measured parameters inside the containment vessel.

The containment vessel overall leakage rate monitoring apparatus provided in the embodiment may perform the aforementioned method embodiments with similar implementation principle and technical effects, and details are not repeated herein.

All modules in the above containment vessel overall leakage rate monitoring apparatus can be implemented in whole or in part through software, hardware, and a combination thereof. The foregoing modules may be embedded in or independent of a processor in a computer device in a hardware form, or may be stored in a memory in the computer device in a software form, so that the processor can invoke and execute operations corresponding to the above-mentioned modules.

In an embodiment, a computer device is provided, which may include a processor and a memory storing a computer program. The processor, when executing the computer program, may implement the following steps of:
acquiring measured parameters inside nuclear reactor containment vessel; and
determining a monitoring result of the containment vessel overall leakage rate according to the measured parameters inside the containment vessel.

In an embodiment, a computer-readable storage medium is provided, on which a computer program is stored. The computer program, when executed by a processor, may cause the processor to implement the following steps of:
acquiring measured parameters inside nuclear reactor containment vessel; and
determining a monitoring result of the containment vessel overall leakage rate according to the measured parameters inside the containment vessel.

In an embodiment, a computer program product is provided, which may include a computer program. the computer program, when executed by a processor, may cause the processor to implement the following steps of:
acquiring measured parameters inside nuclear reactor containment vessel; and
determining a monitoring result of the containment vessel overall leakage rate according to the measured parameters inside the containment vessel.

A person of ordinary skill in the art should understand that all or part of the processes in the above-mentioned method embodiments can be implemented by instructing related hardware through a computer program. The computer program can be stored in a non-transitory computer-readable storage medium. When the computer program is executed, the processes of the above-mentioned method embodiments are included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational database may include, but is not limited to, a distributed database based on blockchain. The processor involved in each embodiment provided in the present invention may be a general-purpose processor, a central processing unit, a graphics processor, a digital signal processor, a programmable logic unit, a data processing logic unit based on quantum computing, etc., which is not limited thereto.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present invention.

The above-described embodiments merely express several implementation modes of the present application, and the description thereof is relatively specific and detailed, but it should not be construed as limiting the scope of the present application. It should be pointed out that, those skilled in the art can make several modifications and improvements without departing from the concept of the present application, which all fall within the scope of protection of the present application. Therefore, the protection scope of the present application should be subject to the appended claims.

## Claims

1. An overall leakage rate monitoring apparatus for a containment vessel, comprising a flow monitoring assembly, a pressure monitoring assembly, a pressure comparison monitoring assembly, an instrument monitoring assembly and a processor, the flow monitoring assembly, the pressure monitoring assembly, the pressure comparison monitoring assembly, and the instrument monitoring assembly being respectively connected to the processor; wherein
the flow monitoring assembly is configured to monitor a pressure relief flow value inside the containment vessel;
the pressure monitoring assembly is configured to monitor a pressure value inside the containment vessel;
the pressure comparison monitoring assembly is configured to monitor a pressure comparison value between pressure values inside and outside the containment vessel;
the instrument monitoring assembly is configured to monitor a temperature and humidity inside the containment vessel; and
the processor is configured to obtain a containment vessel overall leakage rate according to the pressure relief flow value, the pressure value, the pressure comparison value, and the temperature and humidity.

2. The monitoring apparatus according to claim 1, wherein the flow monitoring assembly comprises a first containment vessel isolation valve unit, a drainage unit, and a pressure relief pipeline monitoring unit, both the drainage unit and the pressure relief pipeline monitoring unit are provided outside the containment vessel, the first containment vessel isolation valve unit is connected to the drainage unit, the drainage unit is connected to the processor through the pressure relief pipeline monitoring unit and is configured to transmit the flow value monitored by the flow monitoring assembly to the processor.

3. The monitoring apparatus according to claim 2, wherein the first containment vessel isolation valve unit comprises a first containment vessel penetration member, a first containment vessel internal isolation valve, and a first containment vessel external isolation valve, the first containment vessel internal isolation valve is provided inside the containment vessel, the first containment vessel external isolation valve is provided outside the containment vessel, a first terminal of the first containment vessel internal isolation valve is provided inside the containment vessel, a second terminal of the first containment vessel internal isolation valve is connected to a first terminal of the first containment vessel penetration member, and a second terminal of the first containment vessel penetration member is connected to a first terminal of the first containment vessel external isolation valve.

4. The monitoring apparatus according to claim 3, wherein the drainage unit comprises a first drainage isolation valve and a drainage pit, a first terminal of the first drainage isolation valve is connected to the drainage pit, and a second terminal of the first drainage isolation valve is connected to a second terminal of the first containment vessel external isolation valve.

5. The monitoring apparatus according to claim 4, wherein the pressure relief pipeline monitoring unit comprises a pressure relief pipeline isolation valve, a pressure relief pipeline main flow regulation valve, a pressure relief pipeline test flow regulation valve, a measurement orifice plate, an upstream flow measurement root valve, a downstream flow measurement root valve, a flow measurement instrument, a check valve, a second drainage isolation valve, an auxiliary exhaust valve, and a pressure relief main airflow discharge chamber;
a first terminal of the pressure relief pipeline isolation valve is connected to a convergence point of the first terminal of the first containment vessel external isolation valve, a second terminal of the first drainage isolation valve, and a first terminal of the pressure relief pipeline test flow regulation valve, a second terminal of the pressure relief pipeline test flow regulation valve is connected to the measurement orifice plate;
a second terminal of the pressure relief pipeline isolation valve is connected to a first terminal of the pressure relief pipeline main flow regulation valve, a second terminal of the pressure relief pipeline main flow regulation valve is connected to the measurement orifice plate and a convergence point of a first terminal of the check valve, a first terminal of the second drainage isolation valve, a first terminal of the auxiliary exhaust valve, and the pressure relief main airflow discharge chamber respectively;
the measurement orifice plate is further connected to a first terminal of the upstream flow measurement root valve and a first terminal of the downstream flow measurement root valve respectively, a second terminal of the upstream flow measurement root valve and a second terminal of the downstream flow measurement root valve are both connected to a terminal of the flow measurement instrument, a second terminal of the flow measurement instrument is connected to the processor and is configured to transmit a flow rate measured by the flow measurement instrument to the processor;
a second terminal of the check valve is connected to the second drainage isolation valve and the first terminal of the auxiliary exhaust valve respectively, and a second terminal of the auxiliary exhaust valve is connected to the pressure relief main airflow discharge chamber.

6. The monitoring apparatus according to claim 1, wherein the pressure monitoring assembly comprises a second containment vessel isolation valve unit and a pressure measurement unit, the second containment vessel isolation valve unit is connected to the processor through the pressure measurement unit and is configured to transmit the pressure value monitored by the pressure monitoring assembly to the processor.

7. The monitoring apparatus according to claim 6, wherein the second containment vessel isolation valve unit comprises a second containment vessel penetration member, a second containment vessel internal isolation valve, and a second containment vessel external isolation valve, the second containment vessel internal isolation valve is provided inside the containment vessel, the second containment vessel external isolation valve is provided outside the containment vessel, a first terminal of the second containment vessel internal isolation valve is provided inside the containment vessel, a second terminal of the second containment vessel internal isolation valve is connected to a first terminal of the second containment vessel penetration member, and a second terminal of the second containment vessel penetration member is connected to a first terminal of the second containment vessel external isolation valve.

8. The monitoring apparatus according to claim 7, wherein the pressure measurement unit comprises a first containment vessel pressure measurement subunit and a second containment vessel pressure measurement subunit, the first containment vessel pressure measurement subunit is connected to a second terminal of the second containment vessel external isolation valve and the second containment vessel pressure measurement subunit respectively;
the first containment vessel pressure measurement subunit and the second containment vessel pressure measurement subunit are connected to each other in parallel, and are configured to mutually verify measured pressure values.

9. The monitoring apparatus according to claim 8, wherein the first containment vessel pressure measurement subunit comprises a first containment vessel pressure measurement primary diaphragm valve, a first containment vessel pressure measurement secondary diaphragm valve, a first pressure measurement root valve, and a first containment vessel pressure measurement instrument;
a first terminal of the first containment vessel pressure measurement primary diaphragm valve is connected to the second terminal of the second containment vessel external isolation valve, a second terminal of the first containment vessel pressure measurement primary diaphragm valve is connected to a convergence point of a first terminal of the first containment vessel pressure measurement secondary diaphragm valve and a first terminal of the first pressure measurement root valve, a second terminal of the first pressure measurement root valve is connected to a first terminal of the first containment vessel pressure measurement instrument, a second terminal of the first containment vessel pressure measurement instrument is connected to the processor and is configured to transmit a flow rate measured by the first containment vessel pressure measurement instrument to the processor.

10. The monitoring apparatus according to claim 9, wherein the second containment vessel pressure measurement subunit comprises a second containment vessel pressure measurement primary diaphragm valve, a second containment vessel pressure measurement secondary diaphragm valve, a second pressure measurement root valve, and a second containment vessel pressure measurement instrument;
a first terminal of the second containment vessel pressure measurement primary diaphragm valve is connected to a convergence point of the first terminal of the first containment vessel pressure measurement primary diaphragm valve and the first terminal of the second containment vessel external solation valve, a second terminal of the second containment vessel pressure measurement primary diaphragm valve is connected to a convergence point of a first terminal of the second containment vessel pressure measurement secondary diaphragm valve and a first terminal of the second pressure measurement root valve, a second terminal of the second pressure measurement root valve is connected to the second containment vessel pressure measurement instrument, and a second terminal of the second containment vessel pressure measurement instrument is connected to the processor and is configured to transmit a flow rate measured by the second containment vessel pressure measurement instrument to the processor.

11. The monitoring apparatus according to claim 1, wherein the pressure comparison monitoring assembly comprises a containment vessel internal pressure comparison monitoring unit and a containment vessel external pressure comparison monitoring unit;
the containment vessel internal pressure comparison monitoring unit comprises at least one containment vessel pressure measurement instrument connected to the processor;
the containment vessel external pressure comparison monitoring unit comprises a first containment vessel external pressure comparison monitoring subunit and a second containment vessel external pressure comparison monitoring subunit;
the first containment vessel external pressure comparison monitoring subunit comprises a third containment vessel penetration member, a third containment vessel external isolation valve, and a third containment vessel pressure measurement instrument, a first terminal of the third containment vessel penetration member is connected to the containment vessel, a second terminal of the third containment vessel penetration member is connected to a first terminal of the third containment vessel external isolation valve, a second terminal of the third containment vessel external isolation valve is connected to a first terminal of the third containment vessel pressure measurement instrument, and a second terminal of the third containment vessel pressure measurement instrument is connected to the processor and is configured to transmit a flow rate measured by the third containment vessel pressure measurement instrument to the processor;
the second containment vessel external pressure comparison monitoring subunit comprises a fourth containment vessel penetration member, a fourth containment vessel external isolation valve, and a fourth containment vessel pressure measurement instrument, a first terminal of the fourth containment vessel penetration member is connected to the containment vessel, a second terminal of the fourth containment vessel penetration member is connected to a first terminal of the fourth containment vessel external isolation valve, a second terminal of the fourth containment vessel external isolation valve is connected to a first terminal of the fourth containment vessel pressure measurement instrument, and a second terminal of the fourth containment vessel pressure measurement instrument is connected to the processor and is configured to transmit a flow rate measured by the fourth containment vessel pressure measurement instrument to the processor;
the first containment vessel external pressure comparison monitoring subunit and the second containment vessel external pressure comparison monitoring subunit are provided on both opposite sides of the containment vessel.

12. The monitoring apparatus according to claim 1, wherein the instrument monitoring assembly comprises a temperature instrument monitoring unit and a humidity instrument monitoring unit;
the temperature instrument monitoring unit comprises at least one temperature instrument connected to the processor and configured to transmit a temperature value measured by the temperature instrument to the processor;
the humidity instrument monitoring unit comprises at least one humidity instrument connected to the processor and configured to transmit a humidity value measured by the humidity instrument to the processor.

13. The monitoring apparatus according to claim 12, wherein the instrument monitoring assembly comprises a hydrogen concentration monitoring unit, an alarm monitoring unit, and other monitoring units, and the hydrogen concentration monitoring unit, the alarm monitoring unit, and other monitoring units are respectively connected to the processor.

14. An overall leakage rate monitoring method for a containment vessel, applied to the overall leakage rate monitoring apparatus for the containment vessel of any one of claims 1 to 13, the monitoring method comprising:
acquiring measured parameters inside nuclear reactor containment vessel; and
determining a monitoring result of the containment vessel overall leakage rate according to the measured parameters inside the containment vessel.
